# FASCICULE DE BREVET EUROPEEN

(11) **EP 1 109 464 B1**
(45) Date de publication et mention de la délivrance du brevet: **06.04.2005**
(21) Numéro de dépôt: 99941695.1
(22) Date de dépôt: 03.09.1999
(51) Int. Cl.: A23L 3/015

(54) **PROCESSUS DE TRAITEMENT THERMO-MECANIQUE PAR DETENTE INSTANTANEE CONTROLEE DES FRUITS, JUS ET PEAUX D'AGRUMES**
THEROMECHANISCHE BEHANDLUNG DURCH KONTROLIERTE INSTANT- ENTSPANNUNG FÜR FRÜCHTE, SÄFTE UND ODER SCHALEN VON ZITRUSFRUCHTEN
THERMOMECHANICAL TREATMENT METHOD BY CONTROLLED INSTANT EXPANSION FOR FRUIT, JUICE AND CITRUS PEELS

(30) Priorité: 04.09.1998 FR 9811105
(43) Date de publication de la demande: 27.06.2001
(73) Titulaire: Contento Trade S.r.l., 33030 Campoformido (IT)
(72) Inventeur: ALLAF, Karim, F-17000 La Rochelle (FR); REZZOUG, Sidahmed, F-17042 La Rochelle Cedex (FR); CIOFFI, Flavio, I-33033 Codroipo (IT); CONTENTO, Maria-Pia, I-84100 Salerno (IT); SANYA, Emile, F-17042 La Rochelle (FR)
(74) Mandataire: Breese, Pierre
(86) Numéro de dépôt international: PCT/FR1999/002112
(87) Numéro de publication internationale: WO 2000/013532

(56) Documents cités:
- EP-A- 0 435 302
- WO-A-95/04466
- FR-A- 2 618 981
- FR-A- 2 638 333
- FR-A- 2 656 547
- FR-A- 2 712 206
- GB-A- 759 478
- US-A- 2 278 469
- US-A- 5 188 856
- US-A- 5 288 462

## Description

La présente invention concerne un nouveau procédé de traitement thermo-mécanique des agrumes en vue d'améliorer la qualité du jus ou du fruit entier ou en morceaux ou en tranches et de valoriser la peau par séparation de terpène, et en vue de faciliter l'extraction classique de pectine. Ce procédé permettra également de faciliter le pelage du fruit tout en améliorant la qualité organoleptique et hygiénique du jus liquide ou du fruit par l'impact thermique et la débactérisation localisée à la surface du fruit.

On connaît dans l'état de l'art la méthode classique d'extraction du jus des agrumes comportant généralement les phases suivantes :
1.Sélection des fruits et lavage préliminaire avec une solution bactéricide ;
2 .Conservation des fruits suite à des phases successives de lavage ;
3.Pelage et/ou râpage des fruits en vue de faciliter l'extraction mécanique des huiles essentielles (terpène) de la peau ;
4.Second lavage en vue de l'aspersion des huiles essentielles ;
5.Pressage du fruit ;
6.Filtrage du jus produit par séparation de la pulpe.

De nombreuses modifications sont généralement apportées à ce schéma : citons-en à titre d'exemple la possibilité de remplacer la phase de râpage du fruit par un pressage particulier permettant l'extraction simultanée mais séparée du jus et des huiles essentielles. L'objectif est de réduire les risques de contamination du jus ou du fruit par les huiles essentielles ou par la pectine présentes dans la peau ; sa contamination par les microorganismes ou par les enzymes présentes apparaît tout autant préjudiciable à la bonne qualité du produit fini. L'action des enzymes (présentes en grande quantité au niveau de la peau) rend obligatoire la conservation optimale du jus.

On connaît le brevet français FR2712206 concerne un procédé mettant en oeuvre un dispositif décrit constitué d'un échangeur E à faible DELTA et d'un ensemble de tuyauteries, pompes, robinetterie permet à volonté d'extraire ou de réincorporer les divers condensats organiques produits. Ainsi le chauffage de la matière organique se fait par de la vapeur biologique créée par la vaporisation des condensats, exsudats ou jus de presse. La matière préchauffée mise sous vide vaporise une partie de sa masse. La gestion des liquides permet si nécessaire de préconcentrer la matière organique de 13 % environ ou moins et son jus de presse de 25 % environ ou moins.

Un autre brevet de l'art antérieur, le brevet français FR2656547 concernant un équipement qui permet d'appliquer un barème thermique défini à une matière, en limitant les dégradations oxydatives et pertes de substances et en permettant une récupération de condensats aromatiques. L'appareillage est constitue par un sas hydraulique, suivi d'une enceinte de montée et maintien en température par balayage à contre-courant de vapeur injectée. Le transfert de la matière se fait sans malaxage, par vis et auges appropriées. Le refroidissement par détente sous vide du produit évacue de l'enceinte sous légère pression, dans une enceinte reliée à un condenseur, permet de récupérer des condensats aromatiques.

Le brevet français FR2638333 concerne un procédé et un matériel permettant le chauffage et la mise rapide sous vide d'une matière végétale. Cette détente provoque l'écoulement gravitaire d'un jus et l'émission de vapeurs aromatiques qui sont récupérées séparément sous forme de condensats. L'appareillage est constitué principalement par une enceinte résistant au vide et à la pression, ou la matière à traiter est bien repartie afin d'être conservée dans un ensemble par le chauffage à la vapeur, par un dispositif de condensation et de vide largement dimensionné permettant une détente suffisamment rapide pour déstructurer la matière.

Le brevet français FR2618981 a pour objet un procédé de traitement de légumes frais consistant à traiter les légumes à la vapeur dans une enceinte étanche et après traitement on fait le vide dans l'enceinte.

On connaît par ailleurs le brevet américain US2278469 qui décrit une préparation culinaire pour fruits et végétaux. Cette préparation culinaire consiste à déshydrater les produits alimentaires et à les soumettre à une pression et une température substantiellement plus faibles.

La demande internationale de brevet WO95/04466 décrit un procédé de traitement de produits végétaux en vue de la modification de leur texture. Ce procédé comporte une étape d'introduction des produits biologiques dans une enceinte hermétique, une étape de chauffage des produits disposés dans l'enceinte puis une étape ultérieure de détente.

Le brevet français FR8814311 décrit notamment un procédé permettant le chauffage suivi de la mise sous vide d'une matière végétale ; cette détente provoquant l'écoulement gravitaire d'un jus.

Ces procédé de l'art antérieur ne sont pas totalement satisfaisants car ils présente des risques de contamination élevé de la matière biologique traitée.

La présente invention offre la possibilité d'améliorer sensiblement le procédé de production du jus des agrumes à travers l'application d'un prétraitement thermomécanique aux fruits et légumes, avant les phases de pelage et de pressage.

Le traitement préconisé dans le cadre de la présente invention est un procédé d'évaporation thermomécanique induite par une détente extrêmement rapide (durée pouvant aller au voisinage de 1/100 de seconde) suite à un traitement maîtrisé sous haute température et haute pression.

On connaît dans l'état de la technique un procédé de traitement par détente instantanée contrôlée, objet du brevet français FR 93 09 728 visant la texturation des produits biologiques en vue de leur soufflage à un taux d'expansion supérieur à 1,5 et quelques réacteurs pour la mise en oeuvre de cette opération. La présente invention ne traite pas des cas envisagés dans ce brevet et dans ses extensions internationales.

Une autre application a fait l'objet d'une demande de brevet FR 98 02 032 ; elle concerne les traitements thermiques, thermomécaniques et thermo-hydromécaniques intervenant dans le cadre des procédés divers de débactérisation, d'étuvage, de microtexturation, de séparation, etc. appliqués à des produits biologiques, végétaux, fruits et légumes, naturels ou transformés, solides, en morceaux ou pulvérulents. Ce brevet définit également du matériel pour la mise en oeuvre de cette application. La présente invention traite un cas particulier de ce brevet et forme ainsi une de ses applications spécifiques aux agrumes.

L'invention concerne un procédé de traitement thermo-mécanique des fruits, légumes, entiers, pelés, en morceaux ou en tranches, ou de leurs peaux comportant une étape de chauffage sous pression et une étape de détente rapide caractérisé en ce qu'il comporte les opérations suivantes :
- au moins une étape initiale consistant à appliquer une haute température couplée à une pression supérieure à 5 bars ;
- au moins une deuxième étape de maintien durant un temps de traitement tr d'une haute température couplée à une pression supérieure à 3 bars;
- une étape ultérieure de détente brusque très rapide (de l'ordre du centième de seconde) vers une pression réduite de l'ordre de 50 millibars et
- une étape de récupération des produits traités et des condensats.

Le matériel utilisé dans le cas de traitement des agrumes est représenté schématiquement en figure 1.

L'installation de traitement selon l'invention comprend un générateur de vapeur sous pression (1),non représenté sur la figure, une chambre de traitement (2), une vanne de connexion (3) à ouverture rapide et à section importante et un réservoir à vide (4). Un système de pompage (5) assure la dépression dans le réservoir de vide (4). L'installation comprend en outre un système de refroidissement des condensats et un condenseur (6).

Le processus de traitement proposé comporte les phases suivantes :
A) Chargement de la chambre de traitement (2) de fruits entiers ou de peaux de fruits après leur pelage.
B) Application d'un vide primaire dans la chambre (voisin de 20 mbar) à travers sa connexion au réservoir à vide (4) ou de préférence par connexion directe à la pompe (5).
C) Injection de vapeur d'eau humide ou sèche sous pression dans la chambre (2) et maintien du traitement durant un certain temps. La nature de la vapeur, la température et la pression de traitement ainsi que la durée de l'opération dépendent de la nature de l'agrume traité ainsi que du but de l'opération en vue d'optimiser l'élimination des terpènes, la récupération de la pectine, etc.
D) Détente brusque (instantanée) vers le vide par une ouverture très rapide de la vanne (3) et la connexion avec le réservoir à vide. Le temps de détente est avantageusement de l'ordre de 1/100 de seconde.
E) Refroidissement et condensation de la vapeur d'eau et des huiles essentielles dans le réservoir à vide et le condenseur et récupération de l'ensemble au niveau (6).
F) Répétition des cycles comportant les phases C, D et E de l'opération à plusieurs reprises puis éjection du produit hors de la chambre de traitement.

La peau récupérée après traitement subit par la suite un traitement classique d'extraction de pectine. Dans le cas où l'opération est réalisée sur les fruits entiers, le traitement thermique assure l'élimination de la contamination bactérienne en surface, réduit la présence enzymatique et facilite le pelage du fruit avant son pressage. Ainsi débactérisé, le fruit pelé peut également être utilisé sous forme de produit fini commercialisable entier ou en tranches ou morceaux.

Les huiles essentielles condensées avec la vapeur du fait de leurs propriétés thermodynamiques seront présentes dans l'eau à la suite de la condensation de l'ensemble des vapeurs sous les deux formes non miscibles et en émulsion. Une étape de séparation gravitationnelle ou par centrifugation suffit pour en assurer une récupération quasi-parfaite.

Les conditions opératoires (temps de traitement thermique, température, pression, etc.) ont un impact direct sur l'efficacité quantitative de l'opération (% des huiles essentielles extraites, quantité de pectine extractible, etc.), ainsi que sur les aspects qualitatifs de ces constituants, du jus et du fruit tout entier. L'optimisation des conditions de traitement dépend de tous ces facteurs ainsi que du réacteur D.I.C. utilisé.

Le traitement proposé dans la présente invention est très rapide. L'opération de Détente Instantanée Contrôlée peut généralement être facilement automatisée. Elle est utilisée pour réaliser simultanément plusieurs opérations unitaires de débactérisation, de désactivation enzymatique, d'extraction et de préparation à l'extraction, de simplification des opérations de pelage, etc. En plus de son intervention couplée à tous ces niveaux, elle se caractérise par une efficacité exceptionnelle et un niveau de qualité très élevée des divers produits issus du traitement.

En ce qui concerne de l'opération d'extraction de terpène proprement dite, il est possible d'aboutir avec le procédé selon l'invention à des huiles essentielles des agrumes en quantités optimales facilitant ainsi l'obtention par pressage d'un jus de haute qualité ou par présentation et commercialisation directes, d'un fruit entier ou en tranches ou morceaux débactérisés et non contaminé par les huiles essentielles présentes naturellement au niveau de la peau. Par comparaison avec les huiles essentielles extraites par entraînement vapeur, le produit obtenu par le procédé selon l'invention est de qualité supérieure, transparente et nettement plus claire. La quantité de pectine extractible augmente également suite au traitement par le procédé selon l'invention.

Le procédé selon l'invention se distingue par sa haute flexibilité et par la capacité de l'insérer facilement dans un cycle de traitement industriel classique ; cette insertion pourra intervenir à différentes phases de l'opération industrielle suivant l'objectif visé.

Le procédé selon l'invention pourra également être utilisé dans le cas de traitement similaire de fruits et légumes divers en vue de l'extraction ou de faciliter l'extraction des composés présents au niveau de la peau et le pelage, de permettre la réalisation de la débactérisation, de mieux préparer le produit au pressage ou à d'autres traitements industriels.

La présente invention concerne ainsi le traitement des fruits entiers, des fruits en morceaux ou de leurs peaux ; elle consiste à introduire le matériel à traiter dans une enceinte dans laquelle on procède à un chauffage très rapide du produit sous pression, par vapeur d'eau sèche ou humide sous pression totale Po par exemple, durant un temps de traitement tr. Les valeurs de tr, de la température et de la pression Po dépendent du matériel traité, des installations mises en jeu et de l'objectif final. L'invention est caractérisée en ce que l'on procède ensuite à une étape ultérieure de détente vers une pression inférieure. La durée de la détente brusque est fonction du produit à traiter, sa forme, ses dimensions et la qualité visée. Elle est systématiquement comprise entre l'instantanéité et quelques secondes. Selon un mode de mise en oeuvre préféré, la mise sous pression est obtenue suite à une étape de mise sous vide (de l'ordre de 50mbar) en vue d'accélérer la cinétique de chauffage.

Pour mieux comprendre la présente invention, nous pouvons citer un exemple de traitement dans le cas d'une série de fruits entiers de Citrus Sinensis L. Les conditions opératoires du procédé selon l'invention sont les suivantes :

| Phases | Durée (sec) | Répétition s | Pression (bar) | Réduction des charges bactérienne s suite au traitement (/ml)¹ | Réduction de l'activité enzymatique suite au traitement (/ml)² | % d'huiles essentielles récupérées³ |
|---|---|---|---|---|---|---|
| 1 | 30 (2x15) | 2 | 7 | <0,001*** | <0,001*** | 93,2 |
| 2 | 30 (2x15) | 2 | 4 | <0,001** * | <0,001** * | 80,6 |
| 3 | 15 | 1 | 7 | 0,005*** | 0,4*** | 84,9 |
| 4 | 15 | 1 | 4 | 0,005*** | 0,4*** | 75,8 |

## Revendications

1. Procédé de traitement thermo-mécanique des fruits, légumes, entiers, pelés, en morceaux ou en tranches, ou de leurs peaux comportant une étape de chauffage sous pression et une étape de détente rapide **caractérisé en ce qu'**il comporte les opérations suivantes :
- au moins une étape initiale consistant à appliquer une haute température couplée à une pression supérieure à 5 bars ;
- au moins une deuxième étape de maintien durant un temps de traitement tr d'une haute température couplée à une pression supérieure à 3 bars;
- une étape ultérieure de détente brusque très rapide (de l'ordre du centième de seconde) vers une pression réduite de l'ordre de 50 millibars et
- une étape de récupération des produits traités et des condensats.

2. Procédé de traitement thermo-mécanique des fruits, légumes, entiers, pelés, en morceaux ou en tranches, ou de leurs peaux selon la revendication 1 **caractérisé par le fait que** la pression et la température de traitement sont obtenues par injection de vapeur d'eau sèche ou humide à la pression considérée dans la zone de traitement.

3. Procédé de traitement thermo-mécanique des fruits, légumes, entiers, pelés, en morceaux ou en tranches, ou de leurs peaux selon les revendications 1 ou 2 **caractérisé par le fait que** la phase d'injection de vapeur est précédée d'une phase d'instauration de vide initial (15-100mbar) en vue d'accélérer le processus de chauffage par injection

4. Procédé de traitement thermo-mécanique des fruits, légumes, entiers, pelés, en morceaux ou en tranches, ou de leurs peaux selon les revendications 1, 2 ou 3 **caractérisé par** le passage à haute pression/haute température s'effectue par des paliers successifs.

5. Procédé de traitement thermo-mécanique des fruits, légumes, entiers, pelés, en morceaux ou en tranches, ou de leurs peaux selon les revendications 1 à 4 **caractérisé en ce que** les composés volatiles à la pression réduite et la température obtenues juste suite à la détente sont récupérés par condensation éventuellement sélective.

6. Procédé de traitement thermo-mécanique des fruits, légumes, entiers, pelés, en morceaux ou en tranches, selon les revendications 1 à 5 **caractérisé en ce que** le fruit est récupéré et conditionné afin de préserver sa faible contamination bactérienne dans les deux processus de pressage ou de commercialisation directe.

7. Installation pour la réalisation du procédé de traitement thermo-mécanique des fruits, légumes, entiers, pelés, en morceaux ou en tranches, ou de leurs peaux comportant une étape de chauffage sous pression et une étape de détente rapide consistant en ce qu'il comporte les opérations suivantes :
- au moins une étape initiale consistant à appliquer une haute température couplée à une pression supérieure à 5 bars ;
- au moins une deuxième étape de maintien durant un temps de traitement tr d'une haute température couplée à une pression supérieure à 3 bars;
- une étape ultérieure de détente brusque très rapide (de l'ordre du centième de seconde) vers une pression réduite de l'ordre de 50 millibars et
- une étape de récupération des produits traités et des condensats,
**caractérisé en ce qu'**il comporte une chambre de traitement étanche admettant la haute température et la haute pression ainsi qu'un vide primaire de 50 mbar, connectée à un réservoir à vide de volume au minimum 20 fois supérieur à celui de la chambre de traitement ainsi que des moyens de mise sous vide par pompage et condensation et de connexion très brusque et rapide entre la chambre de traitement et le réservoir à vide, et d'un système de condensation et de récupération des composés volatiles à la température et la pression instaurées juste la après détente.

## Patentansprüche

1. Verfahren zur thermomechanischen Behandlung von Obst und Gemüse, entweder ganz, geschält oder in Stücken oder Scheiben, oder ihrer Schale, welches aus einem Erhitzungsschritt unter Druck und einem Schritt zur schnellen Entspannung besteht, **dadurch gekennzeichnet, dass** es folgende Operationen umfasst:
- mindestens einen Ausgangsschritt, welcher darin besteht, eine hohe Temperatur verbunden mit einem Druck von über 5 Bar aufzubringen ;
- mindestens einen zweiten Schritt, in welchem während der Behandlungsdauer tr eine hohe Temperatur verbunden mit einem Druck von über 3 Bar beibehalten wird ;
- einen späteren Schritt zur plötzlichen, sehr schnellen Entspannung (in einer Größenordnung von der hundertstel Sekunde) auf einen reduzierten Druck von etwa 50 Millibar und
- einen Schritt zur Wiedergewinnung der behandelten Produkte und Kondensate.

2. Verfahren zur thermomechanischen Behandlung von Obst und Gemüse, entweder ganz, geschält oder in Stücken oder Scheiben, oder ihrer Schale nach Anspruch 1, **dadurch gekennzeichnet, dass** die Behandlungstemperatur und der Behandlungsdruck durch Einspritzen von trockenem oder feuchtem Wasserdampf bei dem in dem Behandlungsbereich bedachten Druck erreicht wird.

3. Verfahren zur thermomechanischen Behandlung von Obst und Gemüse, entweder ganz, geschält oder in Stücken oder Scheiben, oder ihrer Schale nach den Ansprüchen 1 oder 2,
**dadurch gekennzeichnet, dass** dem Einspritzschritt ein Schritt zur Bildung eines anfänglichen luftleeren Raums (15-100 mbar) vorangeht, um den Prozess der Erhitzung durch Einspritzung zu beschleunigen.

4. Verfahren zur thermomechanischen Behandlung von Obst und Gemüse, entweder ganz, geschält oder in Stücken oder Scheiben, oder ihrer Schale nach den Ansprüchen 1, 2 oder 3, **dadurch gekennzeichnet, dass** der Übergang zu dem Hochdruck / der hohen Temperatur stufenweise erfolgt.

5. Verfahren zur thermomechanischen Behandlung von Obst und Gemüse, entweder ganz, geschält oder in Stücken oder Scheiben, oder ihrer Schale nach den Ansprüchen 1 bis 4, **dadurch gekennzeichnet, dass** die flüchtigen Bestandteile, welche unmittelbar nach der Entspannung bei reduziertem Druck und der erreichten Temperatur erhalten werden, durch Kondensierung, welche selektiv sein kann, wiedergewonnen werden.

6. Verfahren zur thermomechanischen Behandlung von Obst und Gemüse, entweder ganz, geschält oder in Stücken oder Scheiben, oder ihrer Schale nach den Ansprüchen 1 bis 5, **dadurch gekennzeichnet, dass** das Obst wiedergewonnen wird und verpackt wird, um seine geringe bakterielle Kontamination in den beiden Prozessen des Pressens oder des Vertriebs zu bewahren.

7. Anlage zur Durchführung des Verfahrens zur thermomechanischen Behandlung von Obst und Gemüse, entweder ganz, geschält oder in Stücken oder Scheiben, oder ihrer Schale, welches aus einem Erhitzungsschritt unter Druck und einem Schritt zur schnellen Entspannung besteht, darin bestehend, dass es folgende Operationen umfasst:
- mindestens einen Ausgangsschritt, welcher darin besteht, eine hohe Temperatur verbunden mit einem Druck von über 5 Bar aufzubringen ;
- mindestens einen zweiten Schritt, in welchem während der Behandlungsdauer tr eine hohe Temperatur verbunden mit einem Druck von über 3 Bar beibehalten wird ;
- einen späteren Schritt zur plötzlichen, sehr schnellen Entspannung (in einer Größenordnung von der hundertstel Sekunde) auf einen reduzierten Druck von etwa 50 Millibar und
- einen Schritt zur Wiedergewinnung der behandelten Produkte und Kondensate,
**dadurch gekennzeichnet, dass** sie eine dichte Behandlungskammer umfasst, welche die hohe Temperatur und den hohen Druck, sowie eine anfängliche Luftleere von 50 mbar verträgt und an einen Vakuumtank mit einem Volumen von mindestens dem Zwanzigfachen des Volumen der Behandlungskammer angeschlossen ist, sowie Mittel, um sie durch Pumpen und Kondensieren luftleer zu machen und um einen sehr plötzlichen und schnellen Anschluss zwischen der Behandlungskammer und dem luftleeren Raum herzustellen, und ein System zur Kondensierung und Wiedergewinnung der flüchtigen Bestandteile bei der Temperatur und dem Druck, die unmittelbar nach der Entspannung eingeführt werden.

## Claims

1. Process for thermomechanical treatment of whole or peeled fruit or vegetables, in chunks or slices or skins, including a high pressure heating step and a fast pressure reduction step **characterised in that** it comprises the following operations:
- at least one initial step consisting of applying a high temperature combined with a pressure of more than 5 bars;
- at least a second holding step for a high temperature treatment time tr combined with a pressure of more than 3 bars;
- a subsequent very fast sudden pressure reduction step (of the order of a hundredth of a second) to a low pressure of the order of 50 millibars and,
- a step to recover the treated products and condensates.

2. Process for thermomechanical treatment of whole or peeled fruit or vegetables, in chunks or slices or skins according to claim 1, **characterised by** the fact that the treatment pressure and temperature are obtained by injection of dry or wet steam at the pressure considered into the treatment zone.

3. Process for thermomechanical treatment of whole or peeled fruit or vegetables, in chunks or slices or skins according to claim 1 or 2, **characterised by** the fact that the steam injection phase is preceded by a step to create an initial vacuum (15 - 100 mbars) in order to accelerate the injection heating process.

4. Process for thermomechanical treatment of whole or peeled fruit or vegetables, in chunks or slices or skins according to claim 1, 2 or 3 **characterised by** the fact that the change to high pressure / high temperature is made in successive steps.

5. Process for thermomechanical treatment of whole or peeled fruit or vegetables, in chunks or slices or skins according to claims 1 to 4, **characterised by** the fact that the volatile compounds at low pressure and the temperature obtained immediately after the pressure reduction are retrieved by possibly selective condensation.

6. Process for thermomechanical treatment of whole or peeled fruit or vegetables, in chunks or slices or skins according to claims 1 to 5, **characterised by** the fact that the fruit is recovered and packaged so as to protect its low bacterial contamination in the two direct pressing or marketing processes.

7. Installation for performing the thermomechanical treatment process on whole or peeled fruit or vegetables, in chunks or slices or skins, including a high pressure heating step and a fast pressure reduction step **characterised in that** it comprises the following operations:
- at least one initial step consisting of applying a high temperature combined with a pressure of more than 5 bars;
- at least a second holding step for a high temperature treatment time tr combined with a pressure of more than 3 bars;
- a subsequent very fast sudden pressure reduction step (of the order of a hundredth of a second) to a low pressure of the order of 50 millibars and,
- a step to recover the treated products and condensates.
**characterised in that** it comprises a sealed treatment chamber accepting high temperature and high pressure and a primary vacuum of 50 mbars, connected to a vacuum reservoir with a volume not less than 20 times greater than the volume of the treatment chamber and means of creating a vacuum by pumping and condensation and a very sudden and fast connection between the treatment chamber and the vacuum reservoir, and a system for condensation and recovery of volatile compounds at the temperature and pressure in force immediately after pressure reduction.
